# EUROPÄISCHE PATENTSCHRIFT

(11) **EP 3 241 640 B1**
(45) Veröffentlichungstag und Bekanntmachung des Hinweises auf die Patenterteilung: **28.11.2018**
(21) Anmeldenummer: 17000665.4
(22) Anmeldetag: 20.04.2017
(51) Int. Cl.: B23F 21/00, B23F 21/02, B23F 1/02

(54) **VERFAHREN ZUM HARTFEINBEARBEITEN DER VERZAHNUNG EINES ZAHNRADS ODER EINES ZAHNRADÄHNLICHEN PROFILS EINES WERKSTÜCKS**
METHOD FOR PRECISION GRINDING OF THE TEETH OF A GEARWHEEL OR A PROFILE OF A WORKPIECE SIMILAR TO A GEARWHEEL
PROCÉDÉ DE FINITION À HAUTE DURETÉ DE LA DENTURE D'UNE ROUE DENTÉE OU D'UN PROFIL SEMBLABLE À UNE ROUE DENTÉE D'UNE PIÈCE USINÉE

(30) Priorität: 02.05.2016 DE 102016005305
(43) Veröffentlichungstag der Anmeldung: 08.11.2017
(73) Patentinhaber: Kapp Werkzeugmaschinen GmbH, 96450 Coburg (DE); NILES Werkzeugmaschinen GmbH, 12681 Berlin (DE)
(72) Erfinder: Müller, Frank, 96484 Meeder (DE)
(74) Vertreter: Gosdin, Michael

(56) Entgegenhaltungen:
- EP-A1- 2 149 425
- EP-A1- 2 732 893
- EP-A2- 0 282 046
- WO-A1-94/19135
- DE-A1-102004 020 364
- DE-A1-102010 005 435
- DE-B- 1 026 595
- US-A- 3 708 925
- US-B2- 6 402 607

## Beschreibung

Die Erfindung betrifft ein Verfahren zum Hartfeinbearbeiten der Verzahnung eines Zahnrads oder eines zahnradähnlichen Profils eines Werkstücks, wobei das Zahnrad oder Werkstück eine Drehachse aufweist, wobei bei dem Verfahren die Verzahnung des Zahnrads oder das zahnradähnliche Profil des Werkstücks mit einem Hartfeinbearbeitungswerkzeug bearbeitet wird, wobei das Hartfeinbearbeitungswerkzeug eine Drehachse aufweist, um die es bei der Hartfeinbearbeitung rotiert. Ein derartiges Verfahren gemäß dem Oberbegriff des unabhängigen Anspruchs 1 ist aus dem Dokument WO 94/19135 A1 bekannt.

Insbesondere bei der Herstellung von Zahnrädern kommt dem abschließenden Schleifprozess eine wichtige Bedeutung zu. Bei diesem werden die Zahnflanken einer Schleifoperation unterzogen, mit der sie auf die genaue Kontur gebracht werden. Eine effiziente Verfahrensweise bei der Herstellung der Verzahnung ist das Wälzschleifen mit einer Schleifschnecke oder das Profilschleifen mit einer Profilschleifscheibe.
Ein Verfahren der eingangs genannten Art ist aus der DE 10 2010 005 435 A1 bekannt. Hier wird ein Werkstück zwecks Bearbeitung einer stirnseitig angeordneten Verzahnung zunächst einem Schruppschleif-Arbeitsgang und dann einem Schlichtschleif-Arbeitsgang unterzogen, wobei zwecks Vermeidung von Kollisionen zwischen den beiden Verfahrensschritten ein Schwenken der Werkzeugspindel erfolgt.

Weitere vorbekannte Lösungen zeigen die WO 94/19135 A1, die US 6 402 607 B2 und die US 3 708 925. Ähnliche und andere Lösungen offenbaren die EP 2 149 425 A1, die EP 2 732 893 A1, die DE 10 2004 020 364 A1, die EP 0 282 046 A2 und die DE 10 26 595 B.

Zur Optimierung der Flankenoberfläche der Verzahnung ist es bekannt, neben dem eigentlichen Schleifprozess nachfolgend einen Feinschleif-Prozess oder Polierprozess durchzuführen. Ein solcher Feinschleif- oder Polierprozess wird auch als Polierschleifen bezeichnet und stellt eine Nachbearbeitung dar, mit der die Oberflächengüte der Verzahnung erhöht werden kann. Bei besagtem Feinschleif- oder Polierprozess ist es das Ziel der Bearbeitung, durch einen nur noch minimalen Materialabtrag die Oberflächengüte und den Traganteil der Zahnflanken zu erhöhen.

Dabei kommt ein mehrstufiger Prozess zum Einsatz, bei dem zunächst ein konventionelles Wälz- oder Profilschleifen durchgeführt wird und anschließend das genannte Fein- bzw. Polierschleifen folgt. Dabei kommen zwei unterschiedliche Werkzeugspezifikationen zum Einsatz, die sich entweder nur geringfügig oder gar nicht hinsichtlich ihrer Werkzeug-Form bzw. -Profilierung voneinander unterscheiden. Häufig sind die beiden Bereiche für das Wälz- oder Profilschleifen einerseits und das Fein- bzw. Polierschleifen andererseits auf ein und demselben Werkzeugträger angeordnet und fest miteinander verbunden (z. B. verklebt oder verschraubt). Bevorzugt werden beide Bearbeitungsbereiche dann (im Falle eines abzurichtenden Werkzeugs) zunächst gemeinsam abgerichtet. Das Feinschleif- bzw. Polierwerkzeug kann anschließend auch noch durch ein weiteres Profilieren leicht modifiziert werden; hierbei kann beispielsweise ein Zurücksetzen des Außendurchmessers erfolgen. Bei der anschließenden Bearbeitung werden dann die beiden genannten Bereiche nacheinander eingesetzt, wobei prinzipiell allerdings dieselben Werkzeugeinstellungen und insbesondere der gleiche Werkzeug-Schwenkwinkel zu Grunde gelegt werden.

Möglich ist es dabei, Korrekturen beim Fein- bzw. Polierschleifen zu realisieren. Bekannte Korrekturmöglichkeiten sind das Verdrehen der Werkstückachse, um einen Zustellbetrag bzw. den Polierdruck auf der einen Zahnflanke zu reduzieren und auf der anderen Zahnflanke zu erhöhen, sowie die Veränderung des Achsabstandes, was dann bei symmetrischen Profilen auf beide Zahnflanken gleichermaßen wirkt.

Dabei sind allerdings nachteilig häufig die Rauhigkeiten im Kopf- oder Fußbereich der Verzahnung ungewollt unterschiedlich. Die genannten vorbekannten Korrekturmöglichkeiten können dieses Problem nur bedingt lösen. So erhöht eine Achsabstandsverringerung beispielsweise die Bearbeitungskräfte und bringt unter Umständen einen nicht gewünschten Formfehler mit sich.

Nachteilig ist weiterhin, dass die bekannten Lösungen sehr zeitaufwendig sind, da verschiedene Arbeitsschritte für das Einstellen nötig sind, wobei die gewünschten Ergebnisse häufig trotzdem nicht erreicht werden.

Weiterhin ist es nachteilig, dass die erzielten Ergebnisse häufig hinsichtlich der Geometrie der erzeugten Zahnflanke Kompromisse darstellen.

Der Erfindung liegt daher die **Aufgabe** zugrunde, ein Verfahren der eingangs genannten Art bereitzustellen, mit dem es möglich ist, eine Verbesserung der Oberflächengüte der Verzahnung bzw. der zahnradähnlichen Profilierung zu erreichen. Dabei sollen die oben dargestellten Nachteile bei der Korrektur während des Fein- bzw. Polierschleifens vermieden werden können, so dass sich die gewünschte Zahnflankengeometrie präzise ergibt.

Die **Lösung** dieser Aufgabe durch die Erfindung ist dadurch gekennzeichnet, dass das Verfahren die Schritte aufweist:
a) Bereitstellen eines Hartfeinbearbeitungswerkzeugs, das mindestens zwei axial nebeneinander angeordnete Bearbeitungsbereiche aufweist, wobei ein erster Bearbeitungsbereich zum Schleifen der Verzahnung des Zahnrads oder des zahnradähnlichen Profils des Werkstücks ausgebildet ist und wobei ein zweiter Bearbeitungsbereich zum Feinschleifen und/oder Polieren der Verzahnung oder des zahnradähnlichen Profils ausgebildet ist, wobei die Profilierung des Hartfeinbearbeitungswerkzeugs im ersten und im zweiten Bearbeitungsbereich identisch ausgeführt ist;
b) Schleifen der Verzahnung des Zahnrads oder des zahnradähnlichen Profils des Werkstücks mit dem ersten Bearbeitungsbereich des Hartfeinbearbeitungswerkzeugs, wobei zwischen der Drehachse des Zahnrades oder Werkstücks und der Drehachse des Hartfeinbearbeitungswerkzeugs ein erster Schwenkwinkel vorliegt;
c) anschließendes Feinschleifen und/oder Polieren der Verzahnung des Zahnrads oder des zahnradähnlichen Profils des Werkstücks mit dem zweiten Bearbeitungsbereich des Hartfeinbearbeitungswerkzeugs, wobei zwischen der Drehachse des Zahnrades oder Werkstücks und der Drehachse des Hartfeinbearbeitungswerkzeugs ein zweiter Schwenkwinkel vorliegt, der unterschiedlich zum ersten Schwenkwinkel ist.

Als Hartfeinbearbeitungswerkzeug wird bevorzugt ein schneckenförmiges Werkzeug verwendet. Es ist alternativ aber auch möglich, dass als Hartfeinbearbeitungswerkzeug ein scheibenförmiges Werkzeug verwendet wird.

Als Hartfeinbearbeitungswerkzeug kommt weiterhin vorzugsweise ein abrichtbares Werkzeug zum Einsatz.

Als Hartfeinbearbeitungswerkzeug kann ein Werkzeug verwendet werden, das abrasives Material in einem Grundkörper trägt, wobei der Elastizitätsmodul des Materials des Grundkörpers im ersten Bearbeitungsbereich und im zweiten Bearbeitungsbereich unterschiedlich ist. Bevorzugt ist der Elastizitätsmodul des Materials des Grundkörpers im ersten Bearbeitungsbereich höher als im zweiten Bearbeitungsbereich. Spezifisch ist nach einer Ausgestaltung der Erfindung vorgesehen, dass als Hartfeinbearbeitungswerkzeug ein Werkzeug verwendet wird, das im ersten Bearbeitungsbereich einen Grundkörper aus keramischem Material und im zweiten Bearbeitungsbereich einen Grundkörper aufweist, der Kunststoffmaterial, insbesondere Polyurethan, umfasst. Dann ist das Werkzeug im zweiten Bereich elastischer, was das Polierschleifen begünstigen kann.

In einer Maschinensteuerung kann ein Kennfeld oder eine formelmäßige Beziehung hinterlegt werden, das bzw. die für einen vorgegebenen Durchmesser des Hartfeinbearbeitungswerkzeugs und einen gewünschten Abtrags-Betrag auf der Flanke der Verzahnung oder des zahnradähnlichen Profils während des obigen Schritts c) eine Winkeldifferenz zwischen erstem und zweiten Schwenkwinkel vorgibt oder deren Berechnung oder Simulation ermöglicht. Dabei kann insbesondere vorgesehen werden, dass bei der Durchführung des obigen Schritts c) nach Vorgabe eines gewünschten Abtrags-Betrag auf der Flanke der Verzahnung oder des zahnradähnlichen Profils aus dem hinterlegten Kennfeld oder der formelmäßigen Beziehung die benötigte Winkeldifferenz zwischen erstem und zweiten Schwenkwinkel abgerufen, berechnet oder simuliert und realisiert wird.

Die Erfindung sieht insofern vor, dass als Korrekturmöglichkeit im oben genannten Sinne der Werkzeug-Schwenkwinkel verwendet wird. Abweichend vom theoretisch berechneten Schwenkwinkel, der für die Vorbearbeitung (also beim Wälz- oder Profilschleifen) verwendet wird, wird nun eine Korrektur des Schwenkwinkels für das Fein- bzw. Polierschleifen vorgesehen (also beim Polierschleifen).

In Abhängigkeit des Werkzeugdurchmessers kann dabei eine gewünschte Vorgabe (d. h. ein Abtrag-Betrag auf der Zahnflanke bzw. auf dem Profil, vorgegeben in Mikrometern) in eine Schwenkwinkelkorrektur (in Grad) umgerechnet und dann mit dem theoretischen Schwenkwinkel verrechnet werden.

Es hat sich herausgestellt, dass es durch eine solche Schwenkwinkelkorrektur des Werkzeuges leichter möglich ist, den Polierdruck während des Fein- bzw. Polierschleifens zu erhöhen, ohne die nachteilhaften Formfehler oder auch unterschiedliche Rauhheitswerte im Kopf- und Fußbereich der Verzahnung in Kauf zu nehmen. Somit werden das Einstellen der Prozessparameter erleichtert und die Qualität der Verzahnung bzw. des Profils erhöht.

Gemäß dem vorgeschlagenen Konzept wird also beim Feinschleif- bzw. Polierprozess (mit dem zweiten Bearbeitungsbereich des Werkzeugs) der Schwenkwinkel des Schleifkopfes gegenüber der Schleif- bzw. Vorbearbeitung (mit dem ersten Bearbeitungsbereich des Werkzeugs) geändert, wodurch der Druck des Werkzeugs auf die Flanke der Verzahnung verändert und so der Materialabtrag beeinflusst wird.

Nachdem hierbei allerdings der radiale Wirkungsbereich des Werkzeugs auf das Werkstück unverändert bleibt, können verbessert Formtoleranzen der Verzahnung bzw. Profilierung eingehalten werden.

Das vorgeschlagene Verfahren eignet sich zum Feinschleifen bzw. Polieren von Zahnrädern und Sonderprofilen.

In der Zeichnung ist ein Ausführungsbeispiel der Erfindung dargestellt. Es zeigen:

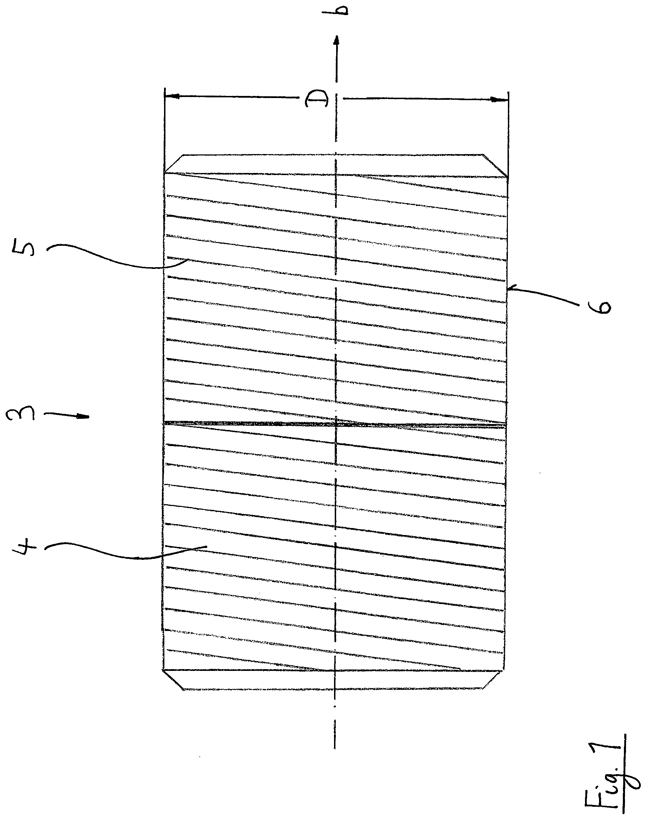

- Fig. 1: die Seitenansicht eines schneckenförmigen Bearbeitungswerkzeugs,
- Fig. 2: in der Seitenansicht das Bearbeitungswerkzeug nach Figur 1 in Eingriff mit einem zu bearbeitenden Zahnrad während des Wälzschleifens,
- Fig. 3: in der Seitenansicht das Bearbeitungswerkzeug nach Figur 1 in Eingriff mit dem zu bearbeitenden Zahnrad während des Feinschleifens bzw. Polierschleifens und
- Fig. 4: eine Kennlinie, aus der sich die benötigte Änderung eines Schwenkwinkels in Abhängigkeit eines gewünschten Abtrag-Betrags für verschiedene Durchmesser der Schleifschnecke ergibt.

Es hat sich gezeigt, dass Wirkungsgradsteigerungen von Zahnradgetrieben ohne Festigkeitsnachteile möglich sind, wenn die Oberflächenrauheit der Zahnflanken reduziert wird und niedrigviskose Getriebeöle eingesetzt werden. Grundlage sind Untersuchungen an Verzahnungen, die mittels Gleitschleifen als Finish-Verfahren hergestellt wurden. Insbesondere aus Sicht der Hersteller von Getrieben ist dieses Verfahren allerdings nicht für die Integration in automatisierte Prozessketten geeignet. Es wurde daher untersucht und nachgewiesen, dass Oberflächengüten von Rz weniger oder gleich 1 µm durch Integration eines Feinschleifprozesses auf konventionellen Verzahnungsschleifmaschinen hergestellt werden können. Moderne Maschinen dieser Art bieten die Möglichkeit, die Technologie des Feinschleifens sowohl beim Profil- als auch beim Wälzschleifverfahren zu nutzen.

Beim Profilschleifen kommt zunächst zur konventionellen Schleifscheibe, die abbrichtbar oder abbrichtfrei sein kann, eine Feinschleifscheibe zum Einsatz. Beide Werkzeuge können gleichzeitig auf einem Werkzeugdorn montiert sein. Nach Abschluss des konventionellen Schleifprozesses wird in einem weiteren Schleifumlauf mit der Feinschleifscheibe in der gleichen Aufspannung die gewünschte hohe Oberflächengüte erzeugt.

Im Bereich der Serienfertigung von Zahnrädern findet aufgrund der vorteilhaften Produktivität zumeist das kontinuierliche Wälzschleifen Anwendung. Durch den Einsatz kombinierter Werkzeuge, bestehend aus einem konventionellen und einem Feinschleif-Werkzeug, können in einer Aufspannung Verzahnungen mit Oberflächengüten (Rz) im Bereich von kleiner 1 µm hergestellt werden. Der zusätzlich erforderliche Aufwand beträgt im Regelfall dabei nur weniger als 50 % der Bearbeitungszeit der konventionellen Schleifbearbeitung.
Gemäß dem vorliegenden Ausführungsbeispiel wird ein Hartfeinbearbeitungswerkzeug 3 in Form einer Schleifschnecke eingesetzt. Dieses dient dem kombinierten Wälzschleifen und dem nachfolgenden Feinschleifen oder Polierschleifen. Hierzu weist das Hartfeinbearbeitungswerkzeug 3 einen ersten Bearbeitungsbereich 4 und einen zweiten Bearbeitungsbereich 5 auf. Der erste Bearbeitungsbereich 4 dient zum Wälzschleifen, während der zweite Bearbeitungsbereich 5 dem Polierschleifen dient. Im vorliegenden Falle handelt es sich bei dem Hartfeinbearbeitungswerkzeug 3 um ein abbrichtbares Werkzeug, das heißt die Profilierung 6 des Werkzeugs wird durch einen Abrichtvorgang hergestellt. Ferner ist die schneckenförmige Profilierung 6 in beiden Bereichen 4 und 5 identisch.

Allerdings kann vorgesehen sein, dass das Trägermaterial bzw. Grundmaterial des Werkzeugs 3 in den beiden Bereichen 4 und 5 unterschiedlich ist. Während im Bereich 4 der Schleifschnecke klassisches Keramikmaterial eingesetzt wird, das mit Abrasivmaterial versetzt ist, kann im Bereich 5 der Polierschleifschnecke ein weicheres bzw. nachgiebigeres Material (konkret: ein Material mit geringerem Elastizitätsmodul) wie beispielsweise Polyurethan eingesetzt werden, so dass das Werkzeug 3 hier ein höheres Maß an Elastizität aufweist, was für das Polierschleifen vorteilhaft sein kann.

Während der Bearbeitung rotiert das Hartfeinbearbeitungswerkzeug 3 um die Drehachse b. Ansonsten weist das Hartfeinbearbeitungswerkzeug einen Durchmesser D auf.

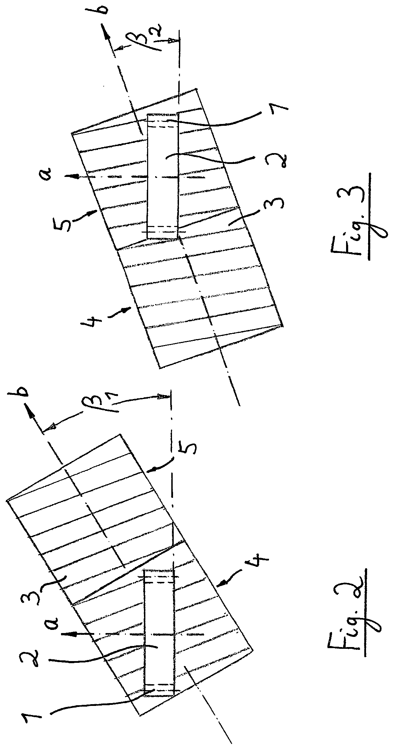

In den Figuren 2 und 3 ist schematisch dargestellt, wie die Prozessverhältnisse während des Wälzschleifens (Figur 2) bzw. während des sich anschließenden Polierschleifens (Figur 3) sind. Hiernach ist zu erkennen, dass in bekannter Weise während der Hartfeinbearbeitung das Hartfeinbearbeitungswerkzeug 3 mit einem zu bearbeitenden Werkstück in Form eines Zahnrad 2 und namentlich mit der Verzahnung 1 desselben kämmt, wobei sich das Zahnrad 2 um seine Drehachse a dreht, während das Hartfeinbearbeitungswerkzeug 3 um die Drehachse b rotiert.

Wie in Figur 2 zu sehen ist, wird für das Wälzschleifen, das den ersten Teilschritt der Hartfeinbearbeitung darstellt, der erste Bearbeitungsbereich 4 des Hartfeinbearbeitungswerkzeugs 3 eingesetzt, wobei hier zwischen der Drehachse a des Zahnrads 2 und der Drehachse b des Hartfeinbearbeitungswerkzeugs 3 ein erster Schwenkwinkel β₁ vorliegt (dargestellt in den Figuren und mit β bezeichnet ist letztlich der Komplementärwinkel auf 90°). Dieser Schwenkwinkel β₁ entspricht dem theoretischen Winkel, der zwischen den Achsen von Werkstück und Werkzeug vorliegen muss, um beim Wälzschleifen das gewünschte Profil ideal zu produzieren.

Ist das Wälzschleifen - gemäß Figur 2 - vollzogen, schließt sich das Polierschleifen an, das den zweiten und abschließenden Teilschritt der Hartfeinbearbeitung darstellt. Hierzu kommt der zweite Bearbeitungsbereich 5 des Hartfeinbearbeitungswerkzeugs 3 zum Einsatz. Wesentlich ist, dass auch nun wieder ein Schwenkwinkel zwischen der Drehachse a des Zahnrads 2 und der Drehachse b des Hartfeinbearbeitungswerkzeugs 3 vorliegt, dass es sich nunmehr allerdings um einen zweiten Schwenkwinkel β₂ handelt, der sich vom ersten Schwenkwinkel β₁ unterscheidet, also vom idealen Schwenkwinkel, der vorliegen muss, wenn die Idealgeometrie der Verzahnung 1 geschliffen wird.

Durch eine Abweichung des zweiten Schwenkwinkels β₂ vom ersten Schwenkwinkel β₁, also bei Vorliegen einer Winkeldifferenz Δβ, ergibt sich, dass ein zusätzlicher Abtrags-Betrag Δs von den Zahnflanken der Verzahnung 1 abgetragen wird.

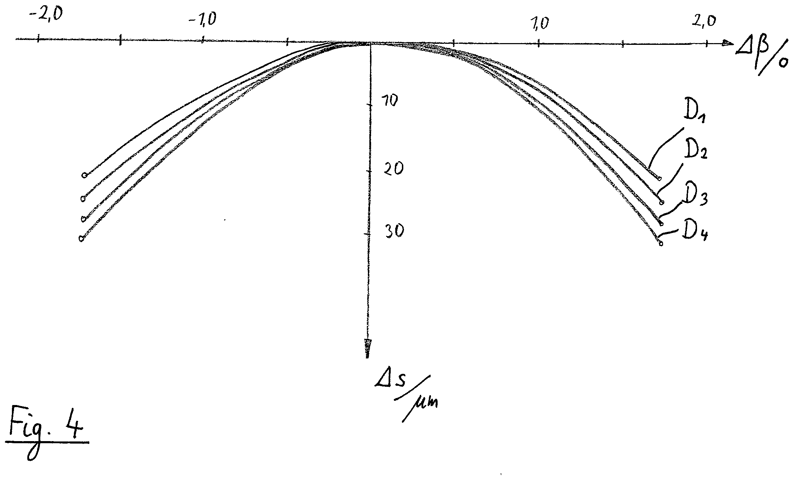

Diese Verhältnisse sind in Figur 4 dargestellt. Hier ist der besagte Abtrags-Betrag Δs in Abhängigkeit der Winkeldifferenz Δβ aufgetragen, und zwar für unterschiedliche Durchmesser D der Schleifschnecke 3. Dabei handelt es sich bei dem Durchmesser D₁ um den kleinsten und bei dem Durchmesser D₄ um den größten Durchmesser der Schleifschnecke 3. Die in Figur 4 dargestellten Kennlinien können in der Maschinensteuerung abgespeichert sein oder dort anhand einer hinterlegten Formel berechnet bzw. simuliert werden, so dass hierauf zurückgegriffen werden kann, wenn nach dem Wälzschleifen das Polierschleifen erfolgen soll. Bei bekanntem und vorgegebenem Durchmesser D der (Polier)Schleifschnecke kann für einen gewünschten Abtrags-Betrag Δs sofort festgestellt werden, wie groß die Winkeldifferenz Δβ sein muss, um das gewünschte Ergebnis zu erreichen. Die für das Polierschleifen benötigte Winkeldifferenz kann demnach entweder direkt als Kurvenschar für einen speziellen Anwendungsfall in der Maschinensteuerung gespeichert sein; genauso ist es aber auch möglich, dass die Winkeldifferenz anhand vorgegebener Variablen (Durchmesser der Schnecke, gewünschter Abtrags-Betrag) in der Maschinesteuerung berechnet oder mittels Simulationen ermittelt und dann die ermittelte Winkeldifferenz für das Polierschleifen verwendet wird.

Im vorliegenden Ausführungsbeispiel kommt also eine zweiteilige Wälzschnecke 3 zum Einsatz, die mit ein und demselben Flankenabrichter profiliert worden ist.

### Bezugszeichenliste:

- 1: Verzahnung / zahnradähnliches Profil
- 2: Zahnrad / Werkstück
- 3: Hartfeinbearbeitungswerkzeug (Schnecke)
- 4: erster Bearbeitungsbereich
- 5: zweiter Bearbeitungsbereich
- 6: Profilierung des Hartfeinbearbeitungswerkzeugs

- a: Drehachse des Zahnrads / des Werkstücks
- b: Drehachse des Hartfeinbearbeitungswerkzeugs

- β₁: erster Schwenkwinkel
- β₂: zweiter Schwenkwinkel
- Δβ: Winkeldifferenz

- D: Durchmesser des Hartfeinbearbeitungswerkzeugs
- Δs: Abtrags-Betrag

## Patentansprüche

1. Verfahren zum Hartfeinbearbeiten der Verzahnung (1) eines Zahnrads (2) oder eines zahnradähnlichen Profils eines Werkstücks, wobei das Zahnrad (2) oder Werkstück eine Drehachse (a) aufweist, wobei bei dem Verfahren die Verzahnung (1) des Zahnrads (2) oder das zahnradähnliche Profil des Werkstücks mit einem Hartfeinbearbeitungswerkzeug (3) bearbeitet wird, wobei das Hartfeinbearbeitungswerkzeug (3) eine Drehachse (b) aufweist, um die es bei der Hartfeinbearbeitung rotiert,
**dadurch gekennzeichnet, dass**
das Verfahren die Schritte aufweist:
a) Bereitstellen eines Hartfeinbearbeitungswerkzeugs (3), das mindestens zwei axial nebeneinander angeordnete Bearbeitungsbereiche (4, 5) aufweist, wobei ein erster Bearbeitungsbereich (4) zum Schleifen der Verzahnung (1) des Zahnrads (2) oder des zahnradähnlichen Profils des Werkstücks ausgebildet ist und wobei ein zweiter Bearbeitungsbereich (5) zum Feinschleifen und/oder Polieren der Verzahnung (1) oder des zahnradähnlichen Profils ausgebildet ist, wobei die Profilierung (6) des Hartfeinbearbeitungswerkzeugs (3) im ersten und im zweiten Bearbeitungsbereich (4, 5) identisch ausgeführt ist;
b) Schleifen der Verzahnung (1) des Zahnrads (2) oder des zahnradähnlichen Profils des Werkstücks mit dem ersten Bearbeitungsbereich (4) des Hartfeinbearbeitungswerkzeugs (3), wobei zwischen der Drehachse (a) des Zahnrades (2) oder Werkstücks und der Drehachse (b) des Hartfeinbearbeitungswerkzeugs (3) ein erster Schwenkwinkel (β₁) vorliegt;
c) Feinschleifen und/oder Polieren der Verzahnung (1) des Zahnrads (2) oder des zahnradähnlichen Profils des Werkstücks mit dem zweiten Bearbeitungsbereich (5) des Hartfeinbearbeitungswerkzeugs (3), wobei zwischen der Drehachse (a) des Zahnrades (2) oder Werkstücks und der Drehachse (b) des Hartfeinbearbeitungswerkzeugs (3) ein zweiter Schwenkwinkel (β₂) vorliegt, der unterschiedlich zum ersten Schwenkwinkel (β₁) ist.

2. Verfahren nach Anspruch 1, **dadurch gekennzeichnet, dass** als Hartfeinbearbeitungswerkzeug (3) ein schneckenförmiges Werkzeug verwendet wird.

3. Verfahren nach Anspruch 1, **dadurch gekennzeichnet, dass** als Hartfeinbearbeitungswerkzeug (3) ein scheibenförmiges Werkzeug verwendet wird.

4. Verfahren nach einem der Ansprüche 1 bis 3, **dadurch gekennzeichnet, dass** als Hartfeinbearbeitungswerkzeug (3) ein abrichtbares Werkzeug verwendet wird.

5. Verfahren nach einem der Ansprüche 1 bis 4, **dadurch gekennzeichnet, dass** als Hartfeinbearbeitungswerkzeug (3) ein Werkzeug verwendet wird, das abrasives Material in einem Grundkörper trägt, wobei der Elastizitätsmodul des Materials des Grundkörpers im ersten Bearbeitungsbereich (4) und im zweiten Bearbeitungsbereich (5) unterschiedlich sind.

6. Verfahren nach Anspruch 5, **dadurch gekennzeichnet, dass** der Elastizitätsmodul des Materials des Grundkörpers im ersten Bearbeitungsbereich (4) höher ist als im zweiten Bearbeitungsbereich (5).

7. Verfahren nach Anspruch 6, **dadurch gekennzeichnet, dass** als Hartfeinbearbeitungswerkzeug (3) ein Werkzeug verwendet wird, das im ersten Bearbeitungsbereich (4) einen Grundkörper aus keramischem Material und im zweiten Bearbeitungsbereich (5) einen Grundkörper aufweist, der Kunststoffmaterial, insbesondere Polyurethan, umfasst.

8. Verfahren nach einem der Ansprüche 1 bis 7, **dadurch gekennzeichnet, dass** in einer Maschinensteuerung ein Kennfeld oder eine formelmäßige Beziehung hinterlegt wird, das bzw. die für einen vorgegebenen Durchmesser (D) des Hartfeinbearbeitungswerkzeugs (3) und einen gewünschten Abtrags-Betrag (Δs) auf der Flanke der Verzahnung (1) oder des zahnradähnlichen Profils während Schritt c) gemäß Anspruch 1 eine Winkeldifferenz (Δβ) zwischen erstem und zweiten Schwenkwinkel (β₁, β₂) vorgibt oder deren Berechnung oder Simulation ermöglicht.

9. Verfahren nach Anspruch 8, **dadurch gekennzeichnet, dass** bei der Durchführung von Schritt c) gemäß Anspruch 1 nach Vorgabe eines gewünschten Abtrags-Betrag (Δs) auf der Flanke der Verzahnung (1) oder des zahnradähnlichen Profils aus dem hinterlegten Kennfeld oder der formelmäßigen Beziehung die benötigte Winkeldifferenz (Δβ) zwischen erstem und zweiten Schwenkwinkel (β₁, β₂) abgerufen, berechnet oder simuliert und realisiert wird.

## Claims

1. Method for hard fine machining of the toothing (1) of a gear (2) or of a gear-like profile of a workpiece, wherein the gear (2) or the workpiece has an axis of rotation (a), wherein at the method the toothing (1) of the gear (2) or the gear-like profile of the workpiece is machined with a hard fine machining tool (3), wherein the hard fine machining tool (3) has an axis of rotation (b) and rotates around the same during hard fine machining,
**characterized in that**
the method comprises the steps:
a) Providing of a hard fine machining tool (3) which comprises at least two axially adjacent machining zones (4, 5), wherein a first machining zone (4) is designed for the grinding of the toothing (1) of the gear (2) or of the gear-like profile of the workpiece and wherein a second machining zone (5) is designed for the fine grinding and/or polishing of the toothing (1) or of the gear-like profile, wherein the profile (6) of the hard fine machining tool (3) is identical in the first and in the second machining zone (4, 5);
b) Grinding of the toothing (1) of the gear (2) or of the gear-like profile of the workpiece with the first machining zone (4) of the hard fine machining tool (3), wherein between the axis of rotation (a) of the gear (2) or of the workpiece and the axis of rotation (b) of the hard fine machining tool (3) a first pivoting angle (β₁) is existent;
c) Fine grinding and/or polishing of the toothing (1) of the gear (2) or of the gear-like profile of the workpiece with the second machining zone (5) of the hard fine machining tool (3), wherein between the axis of rotation (a) of the gear (2) or of the workpiece and the axis of rotation (b) of the hard fine machining tool (3) a second pivoting angle (β₂) is existent, which is different from the first pivoting angle (β₁).

2. Method according to claim 1, **characterized in that** a worm-like tool is used as hard fine machining tool (3).

3. Method according to claim 1, **characterized in that** a disk-shaped tool is used as hard fine machining tool (3).

4. Method according to one of claims 1 to 3, **characterized in that** a dressable tool is used as hard fine machining tool (3).

5. Method according to one of claims 1 to 4, **characterized in that** a tool is used as hard fine machining tool (3) which carries abrasive material in a base body, wherein the modulus of elasticity of the material of the base body in the first machining zone (4) and in the second machining zone (5) are different.

6. Method according to claim 5, **characterized in that** the modulus of elasticity of the material of the base body in the first machining zone (4) is higher than in the second machining zone (5).

7. Method according to claim 6, **characterized in that** a tool is used as hard fine machining tool (3) which has a base body made of ceramic material in the first machining zone (4) and which has a base body in the second machining zone (5) which comprises plastic material, especially polyurethane.

8. Method according to one of claims 1 to 7, **characterized in that** a characteristic diagram or a formula relation is stored in a machine control which provides or allows the calculation or simulation of a difference of angle (Δβ) between the first and the second pivoting angle (β₁, β₂) for a given diameter (D) of the hard fine machining tool (3) and a desired amount of removal (Δs) at a flank of the toothing (1) or of the gear-like profile during step c) according to claim 1.

9. Method according to claim 8, **characterized in that** at the execution of step c) according to claim 1 the required difference of angle (Δβ) between the first and the second pivoting angle (β₁, β₂) is recalled, calculated or simulated from the characteristic diagram or the formula relation and realized after specification of a desired amount of removal (Δs) at a flank of the toothing (1) or of the gear-like profile.

## Revendications

1. Procédé d'usinage de finition dure de la denture (1) d'une roue dentée (2) ou d'un profil d'une pièce similaire à une roue dentée, la roue dentée (2) ou la pièce présentant un axe de rotation (a), au cours du procédé, la denture (1) de la roue dentée (2) ou le profil de pièce similaire à une roue dentée étant usiné(e) avec un outil d'usinage de finition dure (3), l'outil d'usinage de finition dure (3) présentant un axe de rotation (b) autour duquel il tourne lors de l'usinage de finition dure,
**caractérisé en ce que**
le procédé présente les étapes suivantes :
a) fourniture d'un outil d'usinage de finition dure (3) qui présente au moins deux zones d'usinage (4, 5) disposées axialement l'une à côté de l'autre, une première zone d'usinage (4) étant réalisée pour meuler la denture (1) de la roue dentée (2) ou du profil de pièce similaire à une roue dentée et une deuxième zone d'usinage (5) étant réalisée pour effectuer le meulage fin et/ou le polissage de la denture (1) ou du profil similaire à une roue dentée, le profilage (6) de l'outil d'usinage de finition dure (3) étant réalisé de manière identique dans la première et dans la deuxième région d'usinage (4, 5) ;
b) meulage de la denture (1) de la roue dentée (2) ou du profil de pièce similaire à une roue dentée avec la première zone d'usinage (4) de l'outil d'usinage de finition dure (3), un premier angle de pivotement (β₁) existant entre l'axe de rotation (a) de la roue dentée (2) ou de la pièce et l'axe de rotation (b) de l'outil d'usinage de finition dure (3) ;
c) meulage fin et/ou polissage de la denture (1) de la roue dentée (2) ou du profil de pièce similaire à une roue dentée avec la deuxième zone d'usinage (5) de l'outil d'usinage de finition dure (3), un deuxième angle de pivotement (β₂) existant entre l'axe de rotation (a) de la roue dentée (2) ou de la pièce et l'axe de rotation (b) de l'outil d'usinage de finition dure (3), lequel est différent du premier angle de pivotement (β₁) .

2. Procédé selon la revendication 1, **caractérisé en ce que** l'on utilise en tant qu'outil d'usinage de finition dure (3) un outil en forme de vis sans fin.

3. Procédé selon la revendication 1, **caractérisé en ce que** l'on utilise en tant qu'outil d'usinage de finition dure (3) un outil en forme de disque.

4. Procédé selon l'une quelconque des revendications 1 à 3, **caractérisé en ce que** l'on utilise en tant qu'outil d'usinage de finition dure (3) un outil pouvant être dressé.

5. Procédé selon l'une quelconque des revendications 1 à 4, **caractérisé en ce que** l'on utilise en tant qu'outil d'usinage de finition dure (3) un outil qui porte un matériau abrasif dans un corps de base, le module d'élasticité du matériau du corps de base dans la première zone d'usinage (4) et dans la deuxième zone d'usinage (5) étant différent.

6. Procédé selon la revendication 5, **caractérisé en ce que** le module d'élasticité du matériau du corps de base dans la première zone d'usinage (4) est supérieur à celui dans la deuxième zone d'usinage (5) .

7. Procédé selon la revendication 6, **caractérisé en ce que** l'on utilise en tant qu'outil d'usinage de finition dure (3) un outil qui présente, dans la première zone d'usinage (4), un corps de base en matériau céramique et dans la deuxième zone d'usinage (5), un corps de base qui comprend une matière synthétique, en particulier du polyuréthane.

8. Procédé selon l'une quelconque des revendications 1 à 7, **caractérisé en ce qu'**un champ caractéristique ou une relation sous forme de formule est consigné(e) dans une commande de machine, lequel ou laquelle, pour un diamètre prédéfini (D) de l'outil d'usinage de finition dure (3) et pour une valeur d'usure souhaitée (Δs) sur le flanc de la denture (1) ou du profil similaire à une roue dentée pendant l'étape c) selon la revendication 1, prédéfinit une différence d'angle (Δβ) entre le premier et le deuxième angle de pivotement (β₁, β₂) ou permet son calcul ou sa simulation.

9. Procédé selon la revendication 8, **caractérisé en ce que** lors de la mise en oeuvre de l'étape c) selon la revendication 1, en fonction d'une prédéfinition d'une valeur d'usure souhaitée (Δs) sur le flanc de la denture (1) ou du profil similaire à une roue dentée, à partir du champ caractéristique ou de la relation sous forme de formule consigné(e), la différence d'angle nécessaire (Δβ) entre le premier et le deuxième angle de pivotement (β₁, β₂) est appelée, calculée ou simulée et réalisée.
